# EUROPEAN PATENT APPLICATION

(11) **EP 3 680 061 A1**
(43) Date of publication of application: **15.07.2020**
(21) Application number: 18854556.0
(22) Date of filing: 08.08.2018
(51) Int. Cl.: B23Q 3/08, B25J 15/06

(54) **ATTACHMENT TOOL**

(30) Priority: 07.09.2017 JP 2017172116
(71) Applicant: SHINKOH CO., LTD., Okusa, Komaki-city Aichi 485-0802 (JP)
(72) Inventor: MIURA Takahisa, Kasugai-shi Aichi 486-0846 (JP)
(74) Representative: Maikowski & Ninnemann Patentanwälte Partnerschaft mbB
(86) International application number: PCT/JP2018/029819
(87) International publication number: WO 2019/049596

(57) **Abstract**

A fixture (10) includes a supporting body (11) configured to support a front door panel (90) (workpiece) in an inclined state, a pad (12) capable of being abutted to a plate surface (90A) of the front door panel (90), and a negative-pressure unit (20) serving to bring the plate surface of the front door panel (90) into an attracted state by maintaining an inside of a space enclosed by the plate surface (90A) and the pad (12) under negative pressure, while the pad (12) is abutted to the plate surface (90A) of the front door panel (90). This negative-pressure unit (20) can switch between a shutdown state in which an attracted state is not achieved, a roughly attracted state in which the attracted state is achieved with a relatively weak negative pressure, and a main attracted state in which the attracted state is achieved with a relatively strong negative pressure.

## Description

### Technical Field

The present invention relates to a fixture capable of setting a plate-like workpiece in an inclined state.

### Background Art

Conventionally, when processing a plate-like workpiece, the workpiece is set on a fixture in an inclined state. With regard to fixture, for example, a technology described in Japanese Laid-Open Patent Publication No. 2004-179472 is known. In this technology, a suction member for sucking air is disposed in a through hole that is opened in a supporting body for supporting a workpiece in an inclined state. The workpiece with a hand pressed is attracted to the fixture by the suction force. Immediately after starting suctioning the air with the suction member, the workpiece is attracted to the fixture for a while with a relatively weak force. As the air is continuously sucked by the suction member, the work piece is attracted and fixed to the fixture with a stronger force.

### Summary of the Invention

### Problem to be solved by the Invention

According the prior art disclosed in Japanese Laid-Open Patent Publication No. 2004-179472, a workpiece is attracted and fixed to the fixture with a stronger force the closer the suction member, which continuously sucks air, moves toward the workpiece. This is due to the suction force when the suction member comes in close contact with the workpiece. Therefore, in the above prior art, there has been a problem that it is difficult to maintain a workpiece in an attracted state to a fixture with a relatively weak force which allows to adjust a position of the workpiece easily.

### Means for solving the Problem

According to one aspect of the present invention, a fixture may be provided that allows a plate-like workpiece to be set in an inclined state. This fixture may include a supporting body. The supporting body is configured to abut a plate surface of the workpiece along this plate surface to support the set workpiece in an inclined state. Further, the fixture may include a base portion, a lip portion protruding from a surface of the base portion to form an elliptical ring shape, and a pad. The pad allows to abut the lip portion to the plate surface of the workpiece supported to the supporting body. Furthermore, the fixture may include a negative-pressure unit configured to allow the plate surface of the workpiece to be in the attracted state with the pad, by creating a negative pressure within a space enclosed by the plate surface and the pad when the pad is in an abutted state to the plate surface of the workpiece. This negative-pressure unit can switch between a shutdown state, in which the attracted state is not achieved, a roughly attracted state, in which the attracted state is achieved using a relatively weak negative pressure, and a main attracted state, in which the attracted state is achieved using a relatively strong negative pressure.

### Brief Description of Drawings

FIG. 1 is a front view illustrating a fixture 10 according to a first embodiment of the present invention.
FIG. 2 is a top view illustrating the fixture 10 of FIG. 1.
FIG. 3 is a left side view illustrating the fixture 10 of FIG. 1.
FIG. 4 is an enlarged view of a portion indicated by an arrow IV in FIG. 3.
FIG. 5 is an end face view taken along line V-V of FIG. 4.
FIG. 6 is an end face view similar to FIG. 5, illustrating a third state of the present invention.
FIG. 7 is a pneumatic circuit diagram illustrating a pneumatic circuit for the fixture 10 of FIG. 1.
FIG. 8 is a front view illustrating a modified embodiment of the fixture 10 of FIG. 1.
FIG. 9 is a front view illustrating a fixture 30 according to a second embodiment of the present invention.
FIG. 10 is a top view illustrating the fixture 30 of FIG. 9.
FIG. 11 is a left side view illustrating the fixture 30 of FIG. 9.
FIG. 12 is an enlarged view of a portion indicated by an arrow XII in FIG. 11.
FIG. 13 is an end face view taken along line XIII-XIII of FIG. 12.
FIG. 14 is an end face view similar to FIG. 13.

### Embodiments for carrying out the Invention

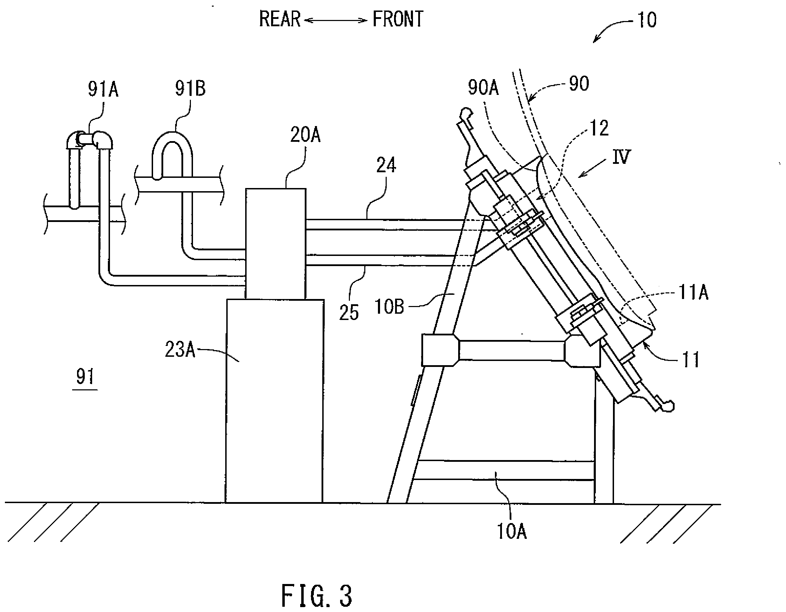

Hereinafter, a fixture 10 according to the first embodiment, which is one of the embodiments for carrying out the present invention, will be described with reference to the drawings. As shown in FIG. 3, this fixture 10 allows a predetermined process (for example, a bending back process of an edge of a front door panel 90) to be carried out while a plate-like workpiece (for example, the front door panel 90) is set in an inclined state.

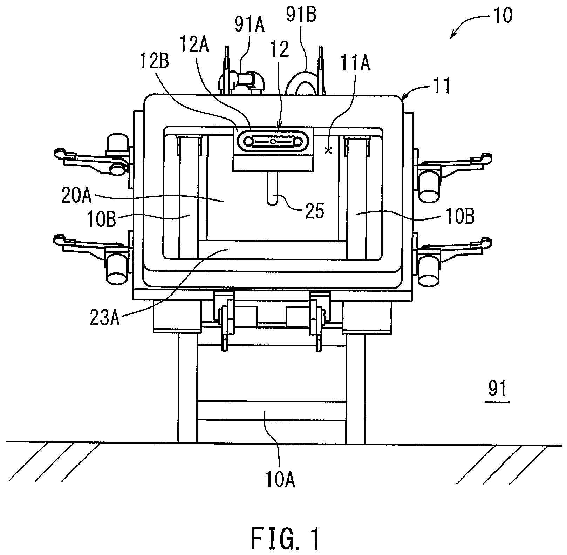

The fixture 10 may be disposed in a facility 91 in which a plurality of air pressure sources 91A, 91B are arranged, as shown in FIG. 1 and FIG. 3. These air pressure sources 91A, 91B serve to supply compressed air with respectively different pressure via a conduit(s). Here, the pressure of the compressed air provided by the air pressure source 91A is lower than the pressure of the compressed air provided by the air pressure source 91B.

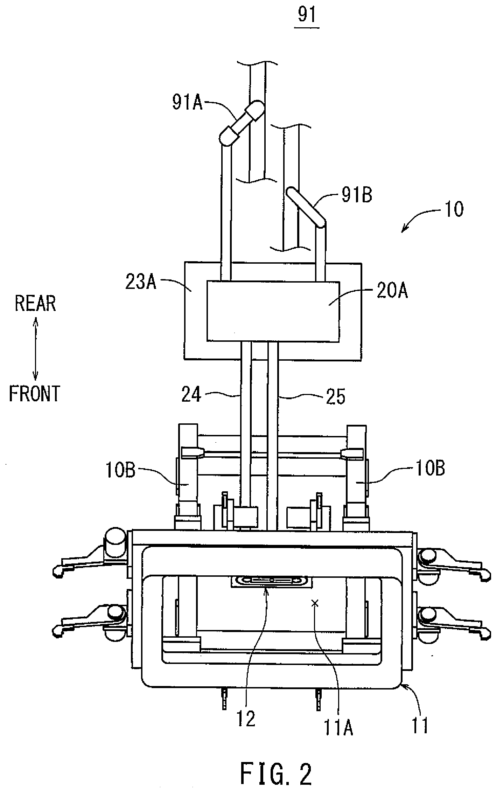

Further, as shown in FIG. 3, the fixture 10 may include a supporting body 11 configured to support the front door panel 90 from a bottom by being abutted to the plate surface 90A of the front door panel 90. The front door panel 90is set as a workpiece. This supporting body 11 may be formed to have a rectangular frame shape with a through hole 11A in the center (see FIG. 1 and FIG. 2). The supporting body 11 may abut only a part of the plate surface 90A of the front door panel 90. This part of the plate surface 90A is to be formed as an edge of the front door panel 90.

Further, as shown in FIG. 1 and FIG. 3, the fixture 10 may include a leg portion 10A exhibiting a two-layer, single-span three-dimensional frame structure and two inclined supports 10B. The inclined supports 10B are rigidly joined to an upper edge of the three-dimensional frame structure of this leg portion 10A. These inclined supports 10B are two gable beams, which are assembled and rigidly joined to have a chevron shape. A supporting body 11 is attached to one of these gable beams in an inclined state, as shown in FIG. 2 and FIG. 3. Thereby, the supporting body 11 allows the front door panel 90, which is abutted to this supporting body 11, to be set in the inclined state shown in FIG. 3.

Further, as shown in FIG. 3, the leg portion 10A collectively supports the weight of the two inclined supports 10B and the load applied to these inclined supports 10B (for example, the load received from the front door panel 90). Hereinafter, it will be described such that a side where the supporting body 11 is attached to the inclined support 10B of the fixture 10 (right side in Fig. 3) will be referred to as a "front side" of the fixture 10, and a side opposite to this front side will be referred to as a "rear side" of the fixture 10 (left side in FIG. 3).

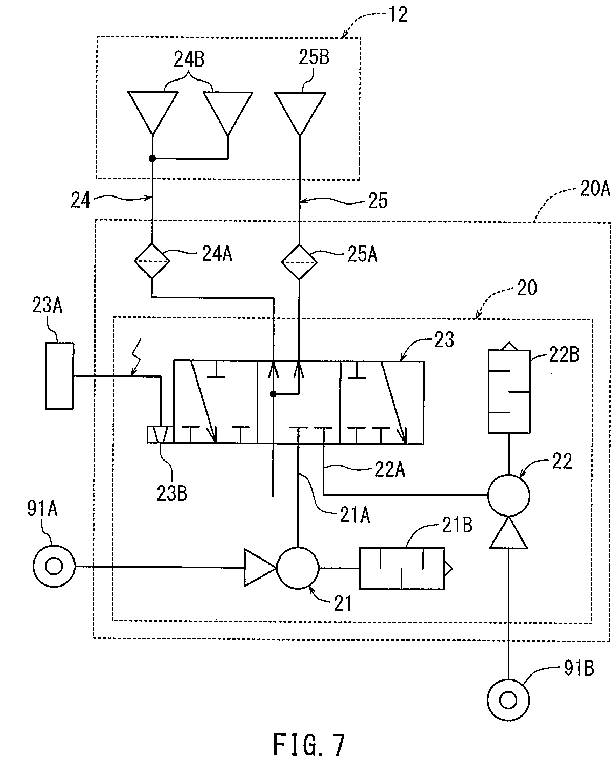

Further, the fixture 10 may include a cuboid housing 20A on the rear side of the leg portion 10A. This housing 20A is placed on a remote-controllable controller unit 23A installed on a floor of the facility 91. Further, the air pressure sources 91A, 91B of the facility 91 may be connected to a rear side of the housing 20A. Here, the control unit 23A serves to control the operation of an electric actuator 23B by controlling electric energy supplied to the electric actuator 23B (see FIG. 7) accommodated in the housing 20A.

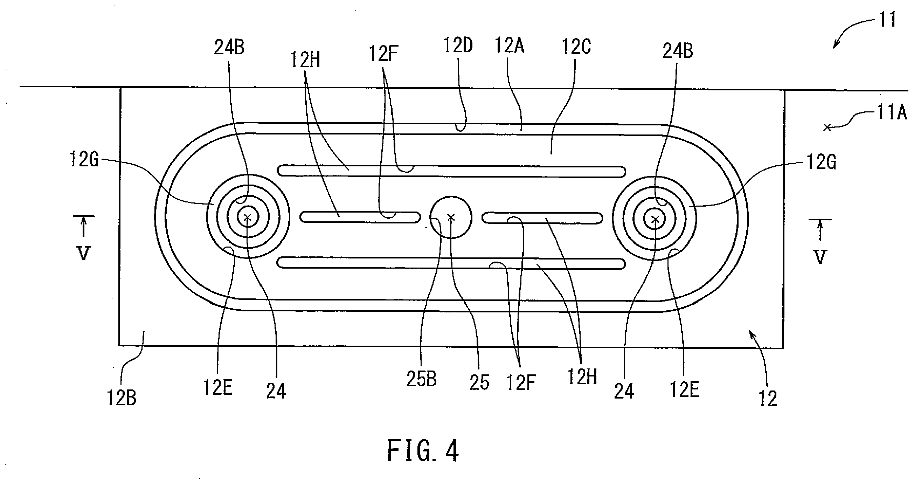

A pad 12 is placed on an upper inner edge of the rectangular frame of the supporting body 11. The supporting body 11 is supported in an inclined state by the inclined supports 10B. A side of the pad 12 configured to be abutted to the plate surface 91A of the front door panel 90 is oriented toward the supporting body 11. This pad 12 may be structured such that a lip portion 12A made of elastomer protrudes from a surface of a metal base portion 12B, so as to form a ring shape, as shown in FIG. 1 and FIG. 4.

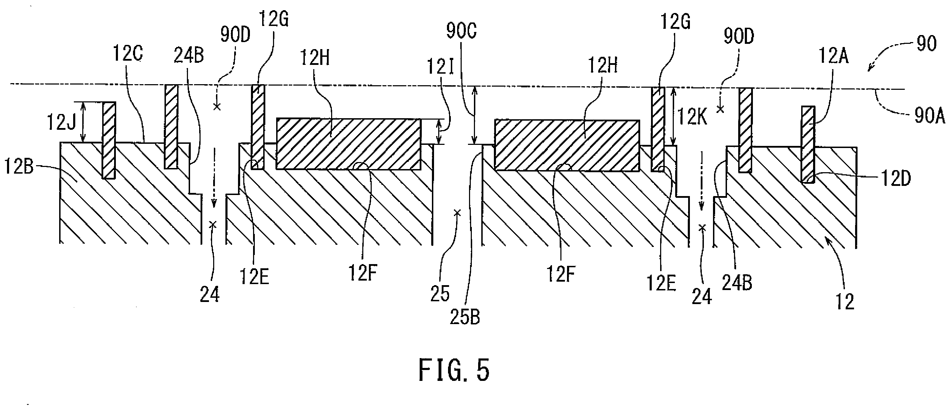

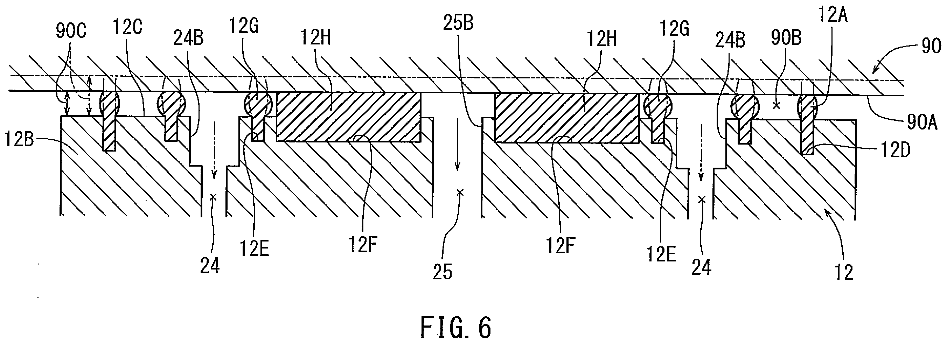

In addition, as shown in FIG. 6, the lip portion 12A of the pad 12 may be abutted to the plate surface 90A of the front door panel 90 while the front door panel 90 is being supported by the supporting body 11. In other words, the pad 12 may be brought into an abutted state in which the pad 12 abuts the plate surface 90A of the front door panel 90. In the present embodiment, the lip portion 12A is fitted in a groove 12D formed with an elliptical ring shape (see FIG. 4) in the base 12B. The lip portion 12A is formed in a rectangular ring made of elastomer and may project from the surface of the base portion 12B with a uniform projecting dimension 12J (see FIG. 5). Further, the base portion 12B may be formed such that an area 12C, which defines an inner side of the ring (see FIG. 4) formed by the lip portion 12A on the base portion 12B, is planer.

Further, an individually opened first suction passage 24 and a second suction passage 25 may be provided in the area 12C of the base portion 12B of the pad 12. One end of the second suction passage 25 opens in the center of the ellipse of the area 12C (see opening 25B in FIG. 4), and the other end opens within the housing 20A and includes a filter 25A (see FIG. 7).

Further, the first suction passage 24 may be a bifurcated branch pipe (see FIG. 7), bifurcated in the pad 12. Both ends of the first suction passage 24 at the bifurcated side open in the area 12C so as to form two openings 24B. These openings 24B are, as shown in FIG. 4 and FIG. 5, disposed on longitudinal sides (left and right sides in FIG. 4) of the area 12C such that the opening 25B of the second suction passage 25 is interposed therebetween. Further, the other end of the first suction passage 24, toward an unopened side in the area 12C, opens within the housing 20A and includes a filter 24A (see FIG. 7).

Further, as shown in FIG. 5 and FIG. 6, a plurality of protrusions 12H may be provided that protrude from the area 12C toward the side of the plate surface 90A of the front door panel 90 (upper side in FIG. 5) in the abutted state. Here, the protrusion length, the length from which the protrusion 12H protrudes from the base portion 12B (see protrusion length 121 in FIG. 5), is set to be the same at any parts of the protrusion 12H. As shown in FIG. 5, the protrusion length 121 of the protrusion 12H with respect to the base portion 12B is smaller than the protrusion length 12J of the lip portion 12A with respect to the base portion 12B.

Further, as shown in FIG. 4, the protrusions 12H may be arranged so as to form a plurality of protruding strips (the 4 strips in FIG. 4) each extending in a longitudinal direction (left-right direction as seen in FIG. 4) of the ellipse in the area 12C. In the present embodiment, the protrusions 12H are rectangular strips made of an elastomer fitted into the grooves 12F. The grooves 12Fare formed straight in the area 12C of the base portion 12B.

Further, as shown in FIG. 5 and FIG. 6, two packing portions 12G may be provided on the pad 12 so that they protrude from the area 12C toward the plate surface 90A of the front door panel 90 in the abutted state. Here, the protrusion length of the packing portion 12G from the base portion 12B (see the protrusion length 12K in FIG. 5) is set to be the same size at any parts of the packing portion 12G. As shown in FIG. 5, the protrusion length 121 of the protrusion 12H with respect to the base portion 12B is larger than the protrusion length 12J of the lip portion 12A with respect to the base portion 12B.

Further, as shown in FIG. 4, each of the packing portions 12G may be disposed so as to surround the respective peripheries of the two openings 24B in the area 12C. In the present embodiment, the packing portions 12G may be elastomer rectangular rings fitted into grooves 12E. The grooves 12E may be formed in a circular ring shape in the area 12C of the base portion 12B.

As shown in FIG. 7, a negative-pressure unit 20, having air-pressure sources 91A, 91B as drive sources, may be accommodated in the housing 20A for the fixture 10. This negative-pressure unit 20 may include a rough suction device 21, which is constantly driven by the relatively low pressure of the air-pressure source 91A so as to suck air from a suction port 21A. Further, the negative-pressure unit 20 may include a main suction device 22, which is constantly driven by a relatively high pressure of the air-pressure source 91B so as to suck air from the suction port 22A with a stronger suction force than the rough suction device 21. In the present embodiment, the rough suction device 21 is an ejector pump provided with a silencer 21B. Further, the main suction device 22 is an ejector pump provided with a silencer 22B.

Further, the negative-pressure unit 20 may include a switching system 23. The switching system 23 is configured to switch connections so that a filter 24A for a first suction passage 24, a filter 25A for a second suction passage 25, a suction port 21A for the rough suction device 21, and a suction port 22A for the main suction device 22 may be selectively connected, respectively. This switching system 23 may include an electric actuator 23B and serve to switch connected state of each of the components attached to the switching system 23 into one of (A), (B), or (C) states, which will be described later, in response to the operation of this electric actuator 23B.
(A) is a state in which both suction ports 21A, 22A are closed, while the filter 24A and the filter 25A are both opened to ambient air. In this state, suction of air through both the first suction passage 24 and the second suction passage 25 is shutdown. As a result, even when the packing portion 12G of the pad 12 abuts the plate surface 90A of the front door panel 90, the negative-pressure unit 20 is in a shutdown state, in which the plate surface 90A is not attracted thereto.
(B) is a state in which the filter 25A and the suction port 22A are respectively closed while the filter 24A and the suction port 21A are connected. In this state, the rough suction device 21 sucks air through the first suction passage 24. The suction of air through the second suction passage 25 is shutdown. At this time, a rough attracted state arises. In the rough attracted state, the plate surface 90A is attracted with a relatively weak negative pressure when the packing portion 12G of the pad 12 in the negative-pressure unit 20 abuts the plate surface 90A of the front door panel 90.
(C) is a state in which a suction port 21A and the filter 24A are respectively closed while the filter 25A and the suction passage 22A are connected. In this state, the main suction device 22 sucks air through the second suction passage 25. Further, the suction of air through the first suction passage 24 is shutdown. At this time, a main attracted state arises. In the main attracted state, the plate surface 90A is attracted with a relatively strong negative pressure when the packing portion 12G of the pad 12 in the negative-pressure unit 20 abuts the plate surface 90A of the front door panel 90.

Further, the electric actuator 23B operates in response to the operation of a remote controller (not shown) of the control unit 23A. However, the electric actuator 23B can instead be set so as to operate in accordance with a robot program, which is input in advance to the control unit 23A.

Subsequently, a method for carrying out a desired process on the front door panel 90 using the fixture 10 constituting each of the above-described components will be described. When using the fixture 10, an operator (not shown) operates a remote controller (not shown) of the control unit 23A in advance such that the switching system 23 for the negative-pressure unit 20 is switched to the above-described (A) state.

The operator then leans the front door panel 90 against the supporting body 11 of the fixture 10, such that this front door panel 90 is placed in an inclined state against the fixture 10. At this time, the operator presses the front door panel 90 with his/her hand to achieve the abutted state (see a virtual line in FIG. 5), in which the entire packing portion 12G of the pad 12 is abutted to the plate surface 90A of the front door panel 90. This state is an abutted state corresponding to the "first state" in the present invention. In the first state, suction of the air through both the first suction passage 24 and the second suction passage 25 is shutdown.

Subsequently, the switching system 23 for the negative-pressure unit 20 is switched from the above-described (A) state to the above-described (B) state. In response, the rough suction device 21 of the negative-pressure unit 20 starts sucking air through the first suction passage 24 so that inside spaces 90D (see FIG. 5) enclosed by the plate surface 90A of the front door panel 90 and the packing portions 12G of the pad 12 are maintained under negative pressure.

At this time, the packing portions 12G are deformed, so as to be crushed, due to the atmospheric pressure applied to the front door panel 90 from the side opposite to the space 90D under negative pressure, as illustrated by the virtual line in FIG. 6. The distance 90C between the base portion 12B of the pad 12 and the plate surface 90A of the front door panel 90 is then reduced. The lip portion 12A of the pad 12 is subsequently abutted to the plate surface 90A of the front door panel 90.

As a result, the negative-pressure unit 20 allows the plate surface 90A of the front door panel 90 to be in an attracted state to the pad 12. This is an attracted state corresponding to the "second state" in the present invention. In the second state, the air is sucked through the first suction passage 24, while flow of the air through the second suction passage 25 is shutdown. In other words, the negative-pressure unit 20 switches from the first state to the second state.

Since the attraction force acting on the front door panel 90 in the second state is relatively weak, the front door panel 90 is temporarily fixed. This allows the front door panel 90 to be capable of slidably moving on the supporting body 11 of the fixture 10. As a result, the operator can easily adjust the position of the temporarily fixed front door panel 90.

Further, since counteraction of the attraction force acting on the lip portion 12A of the pad 12 is relatively weak, a deformation amount of the lip portion 12A due to this counteraction will be negligibly small in the second state. Therefore, in the second state, a distance 90C between the plate surface 90A of the front door panel 90 and the base portion 12B of the pad 12 is greater than the protrusion length 121 (see FIG. 5) of the protrusion 12H from this base portion 12B. In other words, in the second state, the protrusion 12H of the pad 12 is positioned in a state (see virtual line in FIG. 6) with a gap between the plate surface 90A of the front door panel 90.

After the position of the front door panel 90 is appropriately adjusted while being held in the second state, the switching system 23 of the negative-pressure unit 20 is switched to the above-described (C) state. Accordingly, the negative-pressure unit 20 switches the suction path of the air from the first suction passage 24, which corresponds to the rough suction device 21, to the second suction passage 25, which corresponds to the main suction device 22. The negative-pressure unit 20 accordingly reduces the pressure in the space 90B enclosed by the plate surface 90A of the front door panel 90 and the lip portion 12A of the pad 12. The pressure in the space 90B is reduced to be lower than the pressure in the space 90D.

As a result, the negative-pressure unit 20 brings the plate surface 90A of the front door panel 90 into the attracted state, in which the plate surface 90A of the front door panel 90 is attracted to the pad 12 by a relatively strong force. This state is the attracted state corresponding to the "third state" of the present invention. In the third state, air is sucked through the second suction passage 25, while the flow of air through the first suction passage 24 is shutdown. In other words, the negative-pressure unit 20 switches from the second state to the third state.

The attraction force acting on the front door panel 90 in the third state allows the front door panel 90 to be stably held relative to the fixture 10. The operator may then perform a desired process on the front door panel 90, since it was brought into the held state.

Further, in the third state, since the counteraction of the attraction force acting on the lip portion 12A of the pad 12 becomes relatively stronger, the lip portion 12A is deformed so as to be crushed, due to the counteraction (see solid lines in FIG. 6). As a result of the second state being switched to the third state, the distance 90C between the base portion 12B of the pad 12 and the plate surface 90A of the front door panel 90 is reduced, such that the protrusions 12H abut and thereby support the plate surface 90A of the front door panel 90 (see solid lines in FIG. 6). Here, since the packing portion 12G encloses the periphery of the opening 24B, the flow of air between the space 90B and the opening 24B around this periphery is blocked.

Here, in FIG. 6, a deformation amount of the protrusion 12H due to the force received from the plate surface 90A of the front door panel 90 is negligibly small. Alternatively, in the third state, the protrusion 12H may be deformed (not shown) so as to be crushed by the plate surface 90A of the front door panel 90. In other words, the distance 90C between the base portion 12B of the pad 12 and the plate surface 90A of the front door panel 90 is equal to or less than the protrusion length 121 (see in FIGF. 5) of the protrusion 12H from the base portion 12B.

After a desired process is performed on the front door panel 90 in the above third state, the switching system 23 of the negative-pressure unit 20 is switched to the above-described (A) state. At this time, the filter 24A of the first suction passage 24 and the filter 25A of the second suction passage 25 are respectively opened to the ambient air, so that the negative pressure within the space 90D and the space 90B is eliminated. As a result, the front door panel 90 is in a state where it can be freely removed from the fixture 10. Accordingly, the operator may remove the front door panel 90 from the fixture 10 and finish the work.

According to the fixture 10 described above, a switching system 23 of the negative-pressure unit 20 can change whether the front door panel 90 is attracted by the rough suction device 21 with a relatively weak suction force or the main suction device 22 with a relatively strong suction force. As a result, the rough suction device 21 with a relatively weak suction force maintains a state, in which the front door panel 90 is attracted to the fixture 10 such that the position of the front door panel 90 can be easily adjusted while this state is maintained.

Further, the fixture 10 serves to prevent air flowing through the first suction passage 24 when the front door panel 90 is attracted by a relatively strong suction force of the main suction device 22. As a result, it is possible to avoid the attraction force of the front door panel 90 from being weakened by air being sucked from this first suction passage 24. Further, the fixture 10 allows the packing portion 12G of the pad 12 to function as a packing for preventing air from being sucked from the first suction passage 24 when the front door panel 90 is attracted by a relatively strong suction force of the main suction device 22.

Furthermore, the fixture 10 allows a protrusion 12H of the pad 12 to function as a spacer when the front door panel 90 is attracted with a relatively strong suction force by the main suction device 22. This prevents the front door panel 90 from being bent due to the negative pressure, and the space 90B sucked due to the bending of this front door panel 90 from being crushed. Moreover, the fixture 10 allows for a gap between the protrusion 12H of the pad 12 and the plate surface 90A of the front door panel 90 when the front door panel 90 is attracted by a relatively weak suction force of the rough suction device 21. This may avoid the situation where the protrusion 12H of the pad 12 prevents the suction of air by the rough suction device 21.

Next, a fixture 30 according to a second embodiment, which is one of the embodiments for carrying out the present invention, will be described with reference to the drawings. This fixture 30 is a modification of the fixture 10 according to the above-described first embodiment. Therefore, structures of the fixture 30 corresponding to each of the structures of the fixture 10 will not be described in detail, and "20" is added to the reference numerals assigned to each of these structures so as to correspond to the reference numerals of this embodiment.

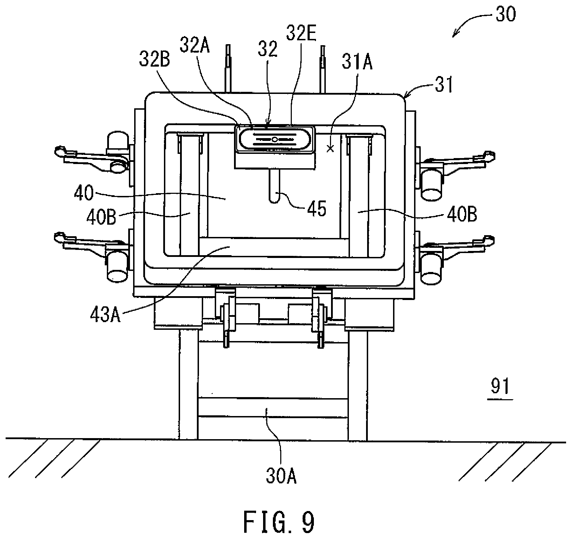

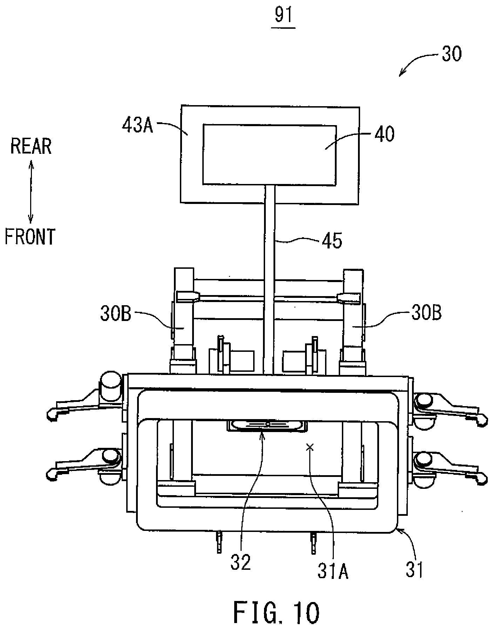

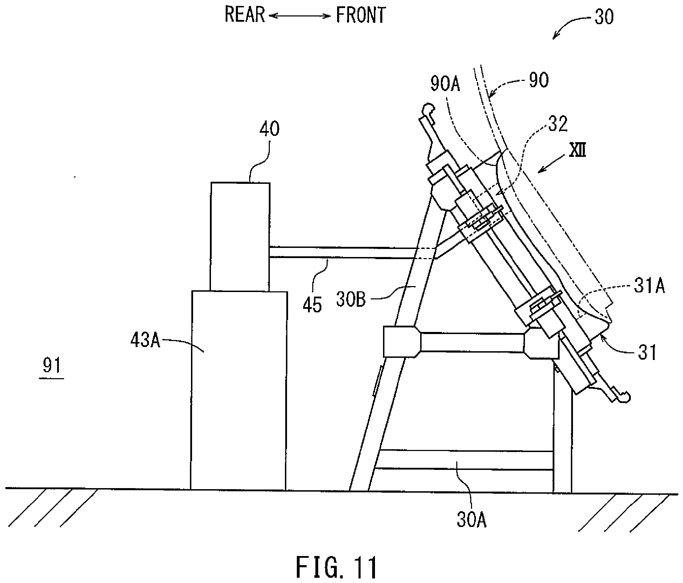

As shown in FIG. 9 to FIG. 11, the fixture 30 may include a negative-pressure unit 40 consisting of an oil rotary vacuum pump having a rotation speed control function, as an alternative to the negative-pressure unit 20 (see FIG. 7) having two air-pressure sources 91A, 91B as power sources. This negative-pressure unit 40 can switch between an air suction state with a relatively weak negative pressure, an air suction state with a relatively strong negative pressure, and a shutdown state where the suction of air is not performed by changing the rotation speed of the oil rotary vacuum pump.

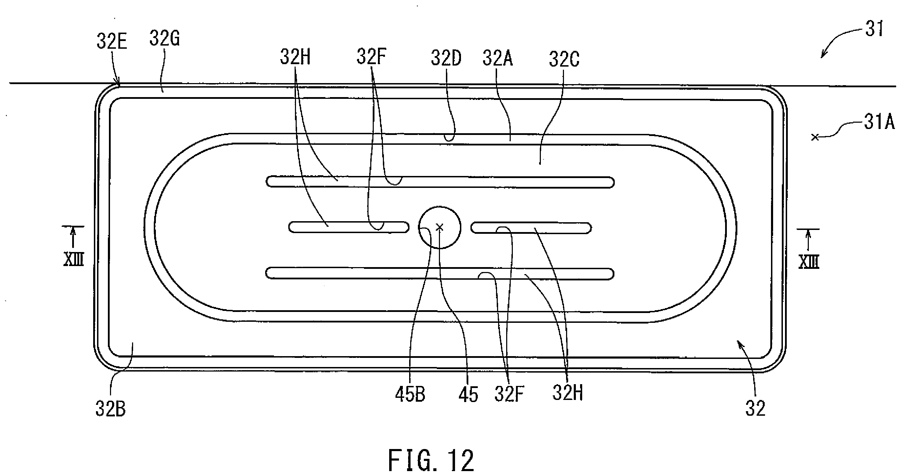

Here, the negative-pressure unit 40 may include only one suction passage 45 for sucking air. Specifically, the fixture 30 may include a pad 32 capable of sucking air through the suction passage 45, as an alternative to the pad 12 (see FIG. 5) capable of sucking air through both the first suction passage 24 and the second suction passage 25. As shown in FIG. 12 to FIG. 14, this pad 32 does not include a structure corresponding to the opening 24B formed in the pad 12 and the packing 12G (see FIG. 4).

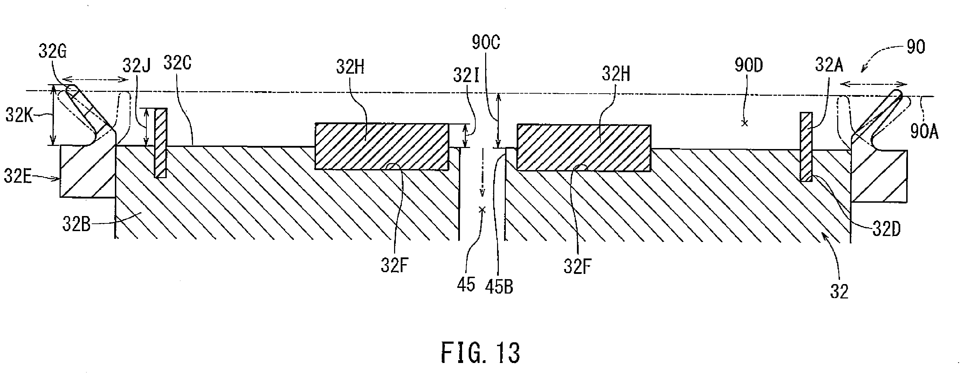

Further, the pad 32 may be provided with a skirt portion 32E. The skirt portion 32E may frame a base portion 32B and may protrude so as to surround the periphery of a ring formed by a lip portion 32A, as shown in FIG. 12 and FIG. 13. This skirt portion 32E may be configured to be flexible without be air permeable (for example, using a closed-cell rubber sponge material).

Furthermore, the skirt portion 32E may include an end edge portion 32G formed in a strip. The end edge portion 32G can be bent by a large amount due to an external force. This end edge portion 32G protrudes in an inclined state in a direction toward an outer side of the base portion 32B. The end edge portion 32G protrudes toward the side of the plate surface 90A (upper side in FIG. 13) when the pad 32 is abutted to the plate surface 90A of the front door panel 90 (see the virtual line in FIG. 13). As a result, the flexibility of the skirt portion 32E is ensured. This allows the end edge portion 32G to move in a direction along the surface of the base portion 32B (left-right in FIG. 13). A protrusion length 32K of the end edge portion 32G of the skirt portion 32E from the base portion 32B is greater than the protrusion length 32J of the lip portion 32A from the base portion 32B.

Hereinafter, a method for carrying out a desired process on the front door panel 90 using the fixture 30 having each of the above-described structures will be described. When using the fixture 30, the operator (not shown) switches the negative-pressure unit 40 into a shutdown state by operating a remote controller (not shown) of the control unit 43A in advance.

Subsequently, the operator leans the front door panel 90 against the supporting body 31 of the fixture 30, such that the front door panel 90 is placed in an inclined state with respect to the fixture 30. At this time, the end edge portion 32G of the pad 32 is abutted to the plate surface 90A of the front door panel 90.

The negative-pressure unit 40 is then switched from the shutdown state to the state in which the suction of air is carried out with a relatively weak negative pressure. This causes the inside of the space 90D (see FIG. 13) enclosed by the plate surface 90A of the front door panel 90 and the skirt portion 32E of the pad 32 to be brought under negative pressure. At this time, the end edge portion 32G of the skirt portion 32A is flexurally deformed by being pressed by the atmospheric pressure applied to the front door panel 90 from the side opposite to the space 90D under negative pressure, as shown by the virtual line in FIG. 13. As a result, the distance 90C between the base portion 32B of the pad 32 and the plate surface 90A of the front door panel 90 is reduced. However, the lip portion 32A of the pad 32 and the plate surface 90A of the door panel 90 are maintained so to be spaced apart, due to the resilient force of the end edge portion 32G.

Thereby, the negative-pressure unit 40 allows the plate surface 90A of the front door panel 90 to be attracted to the pad 32. This state corresponds to a "roughly attracted state" in the present invention. The distance 90C between the base portion 32B and the plate surface 90A of the front door panel 90 in this roughly attracted state is smaller than the protrusion length 32K. Further, in the roughly attracted state, deformation of the end edge portion 32G of the skirt portion 32E is negligibly small, compared to the possible deformation of the skirt portion 32E. Therefore, the front door panel 90 is brought into a temporarily fixed state, so as to be able to be moved, within the resilient limitation of the skirt portion 32E, in a direction along the surface of the base portion 32B (left-right direction in FIG. 13) while the attracted state is maintained. An operator can thus easily adjust the position of the front door panel 90, while in the temporarily fixed state.

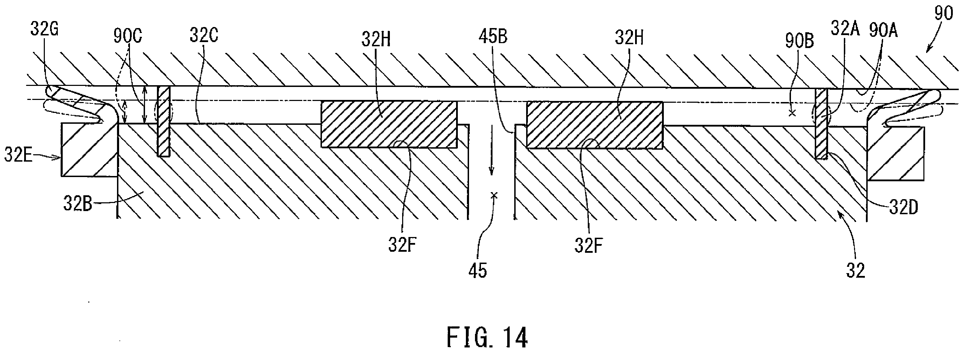

After the position of the front door panel 90 has been appropriately adjusted while in the roughly attracted state, a force oriented toward the base portion 32B of the pad 32 (downwardly oriented in FIG. 14) is applied to this front door panel 90. Thereby, the lip portion 32A of the pad 12 is brought into an abutted state (see solid lines in FIG. 14). In this state, the lip portion 32A is entirely abutted to the plate surface 90A of the front door panel 90, so as to prevent the front door panel 90 from moving in the direction along the surface of the base portion 32B. The force applied to the front door panel 90 may be a force applied by an operator pressing the front door panel 90 or a force applied by switching the negative-pressure unit 40 into a state in which the air is sucked with a relatively stronger negative pressure.

The operator may then carry out a desired process on the front door panel 90. At this time, when the attraction force acting on the front door panel 90 is too weak to securely hold this front door panel 90 to the fixture 30, the operator may operate to increase the negative pressure generated by the negative-pressure unit 40. The operator thus can operate the negative-pressure unit 40 to bring into the main attracted state (see virtual line in FIG. 14), where the attracted state of the front door panel 90 can be achieved with a relatively strong negative pressure. This brings the front door panel 90 into a held state where it is securely held relative to the fixture 30.

After the desired process is performed on the front door panel 90, the operator switches the negative-pressure unit 40 in a shutdown state. At this time, the suction passage 45 is opened to ambient air, so that the negative pressure within the space 90D is released. As a result, the front door panel 90 is capable of being freely removed from the fixture 30. The operator may then remove the front door panel 90 from the fixture 30 to complete the work.

With the above-described fixture 30, the negative-pressure unit 40 can change whether the front door panel 90 is attracted in a roughly attracted state with a relatively weak suction force or in a main attracted state with a relatively strong suction force. As a result, the position of the front door panel 90 can be easily adjusted when the front door panel 90 is attracted to the fixture 30 in the roughly attracted state with a relatively weak suction force and while this state is maintained.

Further, the fixture 30 allows the front door panel 90 to move in a direction along the surface of the base portion 32B, within the resilient limitation of the skirt portion 32E. This may be done when the front door panel 90 is attracted in the roughly attracted state with a relatively weak suction force and while this attracted state is maintained. In this way, the operator can easily adjust the position of the front door panel 90, which is brought into the above-described temporarily fixed state.

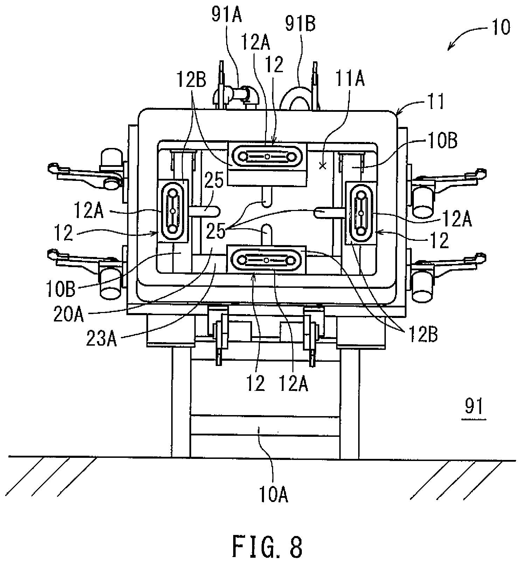

As mentioned above, the embodiments for carrying out the present invention have been described with reference to the first embodiment and the second embodiment. However, it is obvious for a person with ordinary skill in the art that various alternatives, corrections, and/or modifications can be made without departing from the object of the present invention. More specifically, the embodiments for carrying out the present invention may include all alternatives, corrections, and/or modifications without departing from the gist and the object of the claims appended to the present specification. For example, various types of embodiments as follows may be carried out as the embodiments for carrying out the present invention.
(1) The fixture 10 shown in FIG. 1 to FIG. 3 includes a supporting body 11 formed with a rectangular frame shape. This fixture 10 includes a single pad 12 at an inner edge, which is an upper side of this rectangular frame. However, the number and arrangement of the pad(s) provided on the fixture may vary. According to the modified embodiment of the fixture 10 shown in FIG. 8, a total of four pads 12 are arranged at each edge of the rectangular frame support 11. Further, the shape and size of the supporting body provided in the fixture can be changed in accordance with the material, shape, size, etc. of the workpiece set in the fixture.
(2) The rough suction device and the main suction device for the negative-pressure unit are not limited to an ejector pump driven by the air pressure sources that supply compressed air of different pressures. That is, for example, a specific device used as a rough suction device or a main suction device may be changed by replacing the rough suction device with an oil rotary pump, and the main suction device with a pump assembly incorporating a mechanical booster pump, etc.
(3) In the pad of the fixture, the number and specific shape of the protrusions provided in the area inside of the ring formed by the lip portion can be changed. Also, one or both of these protrusions and/or packing portion may be omitted from the pad of the fixture.
(4) The fixture 30 shown in FIG. 9 includes a skirt portion 32E having an air impermeable pad 32. However, when a pad of a fixture is provided with a skirt portion, it is possible to employ a structure in which air leaks at this skirt portion. This structure may be, for example, a hole or gap formed on a periphery of the skirt portion framing the base portion or an incomplete sealing between the base portion and the skirt portion. With this structure, a negative pressure generated by the negative-pressure unit is weakened. The negative pressure is weakened because of the leakage of air past the skirt portion while the plate surface of the workpiece abutted to the skirt portion is spaced apart from the lip portion so that the attraction force acting on the workpiece is reduced. Further, when the plate surface of the workpiece is abutted to the lip portion, the attraction force acting on the workpiece is increased. This is because the influence of the leakage of the air from the skirt portion has now been eliminated. Therefore, the negative-pressure unit can achieve switching from the roughly attracted state, in which the workpiece is attracted with a relatively weak negative pressure, to the main attracted state, in which the workpiece is attracted with a relatively strong negative pressure using a negative-pressure unit having a structure incapable of output controlling.

## Claims

1. A fixture capable of setting a plate-like workpiece in an inclined state, the fixture, comprising:
a supporting body configured to abut a plate surface of the workpiece along this plate surface to support the set workpiece in the inclined state,
a pad having a base portion and a lip portion protruding from a surface of the base portion to form a ring shape, wherein the lip portion is allowed to abut the plate surface of the workpiece supported by the supporting body; and
a negative-pressure unit configured to create a negative pressure within a space enclosed by the plate surface and the pad when the pad is abutted to the plate surface of the workpiece so as to place the plate surface of the workpiece in an attracted state with the pad,
wherein the negative-pressure unit is configured to switch between:
a shutdown state, in which the attracted state is not achieved;
a roughly attracted state, in which the attracted state is achieved with a relatively weak negative pressure; and
a main attracted state, in which the attracted state is achieved using a relatively strong negative pressure.

2. The fixture according to claim 1, wherein the negative-pressure unit comprises:
a rough suction device connected to a first suction passage opened in an area defining an inner side of a ring formed by the lip portion at the base portion of the pad so as to suck air through the first suction passage,
a main suction device connected to a second suction passage opened in the area of the pad separately from the first suction passage so as to suck air through the second suction passage with a stronger suction force than the rough suction device, and
a switching system configured to switch states:
from a first state, in which suction of air through both the first suction passage and the second suction passage are shutdown, to a second state, which is the roughly attracted state, in which air is sucked through the first suction passage while a flow of air through the second suction passage is shutdown, and
from the second state to a third state, which is the main attracted state, in which air is sucked through the second suction passage while a flow of air through the first suction passage is shutdown.

3. The fixture according to claim 2, wherein:
the pad is configured such that a distance between the base portion and the plate surface of the workpiece is shorter when the pad is in the third state than in the second state,
the pad is provided with a protrusion protruding from the area of the base portion to the plate surface of the work piece in the abutted state, and
the protrusion is configured such that a protrusion length of the protrusion from the base portion is shorter than the distance between the base portion and the plate surface of the workpiece in the second state, and longer than the distance between the base portion and the plate surface of the workpiece in the third state.

4. The fixture according to claim 2 or 3, wherein:
the pad is provided with a packing portion protruding from the area of the base portion toward the plate surface of the workpiece in the abutted state,
the packing portion is disposed in such a state in which a protrusion length of the packing portion from the base portion is longer than a distance between the base portion and the plate surface of the workpiece in the third state, and
the packing portion is disposed in such a state in which the packing portion surrounds a periphery of an opening of the first suction passage within the area.

5. The fixture according to claim 1, wherein:
the pad is provided with a skirt portion protruding from the base portion on a side of the plate surface of the workpiece in the abutted state such that the skirt portion surrounds a ring formed by the lip portion, and
the skirt portion is disposed in such a state in which a protrusion length of the skirt portion from the base portion is longer than a distance between the base portion and the plate surface of the workpiece in the roughly attracted state.

6. The fixture according to claim 5, wherein:
the skirt portion is provided with flexibility for allowing an end edge portion of the skirt portion protruding from the base portion to move in a direction along a surface of the base portion.
